# EUROPÄISCHE PATENTSCHRIFT

(11) **EP 2 263 827 B1**
(45) Veröffentlichungstag und Bekanntmachung des Hinweises auf die Patenterteilung: **04.01.2012**
(21) Anmeldenummer: 10164497.9
(22) Anmeldetag: 31.05.2010
(51) Int. Cl.: B23Q 1/01

(54) **Werkzeugmaschine zur Bearbeitung von Werkstücken**
Machine tool for processing workpieces
Appareil pour usiner des pièces

(30) Priorität: 16.06.2009 DE 102009025009; 20.11.2009 DE 102009054043
(43) Veröffentlichungstag der Anmeldung: 22.12.2010
(73) Patentinhaber: MAG IAS GmbH, 73033 Göppingen (DE)
(72) Erfinder: Meidar, Moshe Israel, New York, NY 10022 (US); Horn, Wolfgang, Dr., 73035 Göppingen (DE); Pause, Bernhard, Dr., 74821 Mosbach (DE); Haus, Waldemar, 71364 Winnenden (DE); Krischke, Joachim, 74821 Mosbach (DE); Lang, Heiner, Dr., 75179 Pforzheim (DE)
(74) Vertreter: Hofmann, Stefan

(56) Entgegenhaltungen:
- WO-A1-02/00390
- US-A1- 2006 270 540

## Beschreibung

Die Erfindung betrifft eine Werkzeugmaschine zur Bearbeitung von Werkstücken gemäß dem Oberbegriff des Anspruchs 1.

Derartige Werkzeugmaschinen sind beispielsweise aus der EP 0 568 798 B9 und aus der WO 02/00390 bekannt. Diese Werkzeugmaschinen weisen einen Maschinengrundkörper mit zwei parallel zueinander angeordneten Seitenwänden auf, auf denen ein Mehrachsschlitten verfahrbar angeordnet ist. An dem Mehrachsschlitten ist eine vertikal hängende Arbeitsspindel befestigt, die in vertikaler Richtung verfahrbar ist und zur Aufnahme von Werkstücken oder Werkzeugen dient. Nachteilig bei diesen Werkzeugmaschinen ist, dass denen Bearbeitungsraum durch die Seitenwände seitlich begrenzt und dementsprechend bei der Bearbeitung von Werkstücken nur eine geringe Flexibilität gegeben ist.

Der Erfindung liegt daher die Aufgabe zugrunde, eine gattungsgemäße Werkzeugmaschine derart weiterzubilden, dass eine hohe Flexibilität bei der Bearbeitung der Werkstücke gegeben ist.

Diese Aufgabe wird durch eine Werkzeugmaschine mit den Merkmalen des Anspruchs 1 gelöst. Erfindungsgemäß wurde erkannt, dass eine hohe Flexibilität bei der Bearbeitung von Werkstücken erzielt wird, wenn der Bearbeitungsraum den Seitenwänden vorgelagert ist und diese den Bearbeitungsraum somit nicht seitlich begrenzen. Dies wird dadurch erzielt, dass die Seitenwände jeweils einen Grundkörper mit einem fluchtend daran angeordneten Verfahrvorsprung aufweisen, so dass der z-Schlitten an diesen verfahrbar ist. Der Bearbeitungsraum für die Bearbeitung der Werkstücke ist in y-Richtung unterhalb der Verfahrvorsprünge vor dem Maschinenbett und den Seitenwänden ausgebildet. Der Bearbeitungsraum ist hierdurch weder seitlich in x-Richtung noch nach vorne in z-Richtung begrenzt. Die Verfahrvorsprünge können in ihrer Länge in z-Richtung derart angepasst werden, dass je nach Bedarf unterschiedliche Werkstückpositioniereinheiten in dem Bearbeitungsraum angeordnet werden können, so dass unterschiedlichste Bearbeitungsaufgaben mit der erfindungsgemäßen Werkzeugmaschine durchführbar sind. Dabei bleiben die prinzipiellen Vorteile der Portalbauweise erhalten. Die Werkzeugmaschine weist also einen stabilen, kompakten und modulartigen Aufbau auf, wobei alle Führungen zum Verfahren der Schlitten und der Werkzeugspindel außerhalb des Bearbeitungsraums angeordnet und so vor Verschmutzungen geschützt sind. Vorzugsweise ist jeder der Verfahrvorsprünge einteilig mit dem zugehörigen Grundkörper ausgebildet.

Eine Werkzeugmaschine nach Anspruch 2 ermöglicht eine einfache Montage des z-Schlittens auf den Grundkörpern der Seitenwände und den zugehörigen Verfahrvorsprüngen. Dadurch, dass jeder der Verfahrvorsprünge einteilig mit dem zugehörigen Grundkörper ausgebildet ist, weisen die Seitenwände eine hohe Stabilität auf.

Eine Werkzeugmaschine nach Anspruch 3 stellt eine Befestigungsmöglichkeit für ein Teil der Werkstückpositioniereinheit an der dem Maschinenbett zugewandten Verfahrvorsprung-Unterseite der Verfahrvorsprünge bereit. An den Verfahrvorsprung-Unterseiten können beispielsweise einseitig oder zweiseitig Werkstückaufnahmen hängend angeordnet werden, so dass der Bearbeitungsraum unterhalb dieser frei zugänglich bleibt. In dem Bearbeitungsraum unterhalb der Werkstückaufnahmen können dann beispielsweise weitere Werkzeuge angeordnet werden.

Eine Werkzeugmaschine nach Anspruch 4 ermöglicht ein flexibles Beschicken durch zumindest eine der Seitenwände. Durch die mindestens eine Beschickungsöffnung können mittels einer entsprechenden Transporteinrichtung Werkzeuge und/oder Werkstücke in den Arbeitsraum zwischen den Seitenwänden zu- und/oder abgeführt werden. Dadurch, dass jede der Seitenwände eine Beschickungsöffnung aufweist, die zueinander fluchtend ausgebildet sind, wird das Durchführen einer Transporteinrichtung durch den Arbeitsraum zwischen den Seitenwänden ermöglicht. Somit können Werkzeuge und/oder Werkstücke durch eine der Seitenwände zu- und durch die andere der Seitenwände abgeführt werden.

Eine Werkzeugmaschine nach Anspruch 5 stellt eine Befestigungsmöglichkeit für die Werkstückpositioniereinheit auf den Auflagevorsprüngen bereit. Insbesondere können Teile der Werkstückpositioniereinheit in den durch die Auflagevorsprünge und die zugehörigen Verfahrvorsprünge gebildeten Freiräumen angeordnet werden. Dadurch, dass jeder der Auflagevorsprünge einteilig mit dem zugehörigen Grundkörper ausgebildet ist, weisen die Auflagevorsprünge eine hohe Steifigkeit auf.

Eine Werkzeugmaschine nach Anspruch 6 ermöglicht die Herstellung von sphärischen Werkstück-Oberflächen. Durch die Ausbildung der Werkstückpositioniereinheit als Dreh-Schwenk-Brücke wird eine fünfachsige Bearbeitung der Werkstücke ermöglicht. Die Werkzeugspindel ist entlang von drei Linearachsen in x-, y- und z-Richtung verfahrbar. Zusätzlich ist ein auf der Werkstückpositioniereinheit angeordnetes Werkstück um zwei Rotationsachsen verschwenkbar. Diese Rotationsachsen werden üblicherweise als A- und B-Achse bezeichnet. Eine derartige Dreh-Schwenk-Brücke ist grundsätzlich bekannt. Durch die stehende Anordnung der Brückenantriebe für die A-Achse in den Freiräumen zwischen den Auflagevorsprüngen und den Verfahrvorsprüngen werden die bei der Bearbeitung wirkenden Bearbeitungskräfte optimal von den Seitenwänden und dem Maschinengestell aufgenommen und gleichzeitig eine optimale Zugänglichkeit zu den Brückenantrieben erzielt, da diese nicht zwischen den Seitenwänden angeordnet sind.

Eine Werkzeugmaschine nach Anspruch 7 weist eine hohe Produktivität und somit niedrige Stück- und Maschinenkosten auf. Dadurch, dass zwei Werkstückpositioniereinheiten vorgesehen sind, kann eine Werkstückpositioniereinheit bestückt werden, während mit der weiteren Werkstückpositioniereinheit eine Bearbeitung von Werkstücken erfolgt. Die Werkstückpositioniereinheiten werden wechselseitig bestückt und zur Bearbeitung eingesetzt. Darüber hinaus kann der Werkstückträger aufgrund des polygonförmigen Querschnitts eine Vielzahl von Werkstücken aufnehmen. Dadurch, dass die Werkstückträger unabhängig voneinander mittels der Positionierantriebe um eine gemeinsame, horizontal verlaufende Schwenkachse verschwenkbar sind, wird eine hohe Flexibilität beim gleichzeitigen Bearbeiten von Werkstücken und Bestücken mit Werkstücken ermöglicht. Das Bestücken kann unabhängig vom Bearbeiten erfolgen.

Eine Werkzeugmaschine nach Anspruch 8 ermöglicht eine einfache und schnelle Bearbeitung der Werkstücke. Insbesondere der Verfahrweg zwischen den Werkstückträgern wird minimiert.

Eine Werkzeugmaschine nach Anspruch 9 ermöglicht die gleichzeitige Bearbeitung von mehreren Werkstücken, wodurch die Produktivität gesteigert wird. Die Werkzeugmaschine weist insbesondere zwei nebeneinander angeordnete Werkzeugspindeln auf, wobei jede Polygonseite der Werkstückträger eine entsprechende Anzahl von Werkstückaufnahmen aufweist. Der Abstand der Werkzeugspindeln entspricht dem Abstand der Werkstückaufnahmen an jeder Polygonseite, sodass die parallele Bearbeitung der Werkstücke einheitlich erfolgen kann.

Eine Werkzeugmaschine nach Anspruch 10 ermöglicht eine Bearbeitung von wellenförmigen Werkstücken. Die zweite Werkstückaufnahme kann beispielsweise als Reitstock oder als Werkstückspindel ausgebildet sein. Die wellenförmigen Werkstücke werden zur Bearbeitung in den Werkstückaufnahmen beidseitig gelagert, wobei mindestens eine der Werkstückaufnahmen drehantreibbar ist.

Eine Werkzeugmaschine nach Anspruch 11 ermöglicht die Bearbeitung von wellenförmigen Werkstücken unterschiedlicher Länge. Die an dem x-Schlitten angeordnete zweite Werkstückspindel kann in Abhängigkeit der Länge des Werkstückes in der x-Richtung verfahren werden. Weiterhin können flanschförmige Werkstücke beidseitig bearbeitet werden. Hierzu wird das flanschförmige Werkstück zunächst in der ersten Werkstückspindel aufgenommen und an einer ersten Seite bearbeitet. Zur Bearbeitung an einer zweiten Seite wird das Werkstück an die verfahrbare zweite Werkstückspindel übergeben. Der Bearbeitungsraum stellt für den x-Schlitten ausreichend Platz zur Verfügung, um diesen in der x-Richtung verfahrbar an der Maschinenbett-Frontseite anzuordnen.

Eine Werkzeugmaschine nach Anspruch 12 erhöht die Flexibilität bei der Werkstückbearbeitung. Dadurch, dass die erste Werkstückspindel hängend angeordnet ist, kann der Werkzeugrevolver unter diese Werkstückspindel verfahren werden, so dass auch eine Übergabe von flanschförmigen Werkstücken an die zweite Werkstückspindel durchführbar ist.

Eine Werkzeugmaschine nach Anspruch 13 ermöglicht eine fünfachsige Bearbeitung von Werkstücken. Die Werkstückpositioniereinheit ist als Zwei-Achsen-Tisch ausgebildet, bei dem eine Schwenkachse in der y-z-Ebene relativ zu der y-Richtung geneigt verläuft. Durch die Verfahrvorsprünge kann die Werkzeugspindel den Zwei-Achsen-Tisch in jeder Stellung weit überfahren, so dass ein darauf aufgespanntes Werkstück in jeder Stellung des Zwei-Achsen-Tisches bearbeitbar ist.

Eine Werkzeugmaschine nach Anspruch 14 ermöglicht ein einfaches Aufsammeln von bei der Bearbeitung anfallender Späne. Der Bearbeitungsraum stellt ausreichend Platz für die Positionierung des Spänesammlers unterhalb der Werkstückpositioniereinheit bereit.

Eine Werkzeugmaschine nach Anspruch 15 stellt in kompakter Weise ein Werkzeugmagazin bereit. Der zwischen den Seitenwänden zur Verfügung stehende Arbeitsraum kann problemlos für einen Werkzeugwechsel genutzt werden.

Weitere Merkmale, Vorteile und Einzelheiten der Erfindung ergeben sich aus der nachfolgenden Beschreibung mehrerer Ausführungsbeispiele. Es zeigen:
- Fig. 1: eine perspektivische Ansicht einer Werkzeugmaschine gemäß einem ersten Ausführungsbeispiel,
- Fig. 2: eine Seitenansicht der Werkzeugmaschine in Fig. 1,
- Fig. 3: einen parallel zu den Seitenwänden verlaufenden Längs- schnitt durch die Werkzeugmaschine in Fig. 1,
- Fig. 4: eine perspektivische Ansicht einer Werkzeugmaschine gemäß einem zweiten Ausführungsbeispiel,
- Fig. 5: eine perspektivische Ansicht einer Werkzeugmaschine gemäß einem dritten Ausführungsbeispiel,
- Fig. 6: eine Frontansicht einer Werkzeugmaschine gemäß einem vierten Ausführungsbeispiel,
- Fig. 7: eine perspektivische Ansicht einer Werkzeugmaschine gemäß einem fünften Ausführungsbeispiel,
- Fig. 8: einen parallel zu den Seitenwänden verlaufenden Längs- schnitt durch die Werkzeugmaschine in Fig. 7,
- Fig. 9: eine perspektivische Ansicht einer Werkzeugmaschine gemäß einem sechsten Ausführungsbeispiel,
- Fig. 10: eine perspektivische Ansicht einer Werkzeugmaschine gemäß einem siebten Ausführungsbeispiel,
- Fig. 11: einen parallel zu den Seitenwänden verlaufenden Längs- schnitt durch die Werkzeugmaschine in Fig. 10,
- Fig. 12: eine perspektivische Ansicht einer Werkzeugmaschine gemäß einem achten Ausführungsbeispiel,
- Fig. 13: eine perspektivische Ansicht einer Werkzeugmaschine gemäß einem neunten Ausführungsbeispiel, und
- Fig. 14: eine perspektivische Ansicht der Werkzeugmaschine in Fig. 13 mit Abschirmungen für die Werkstückbearbeitung.

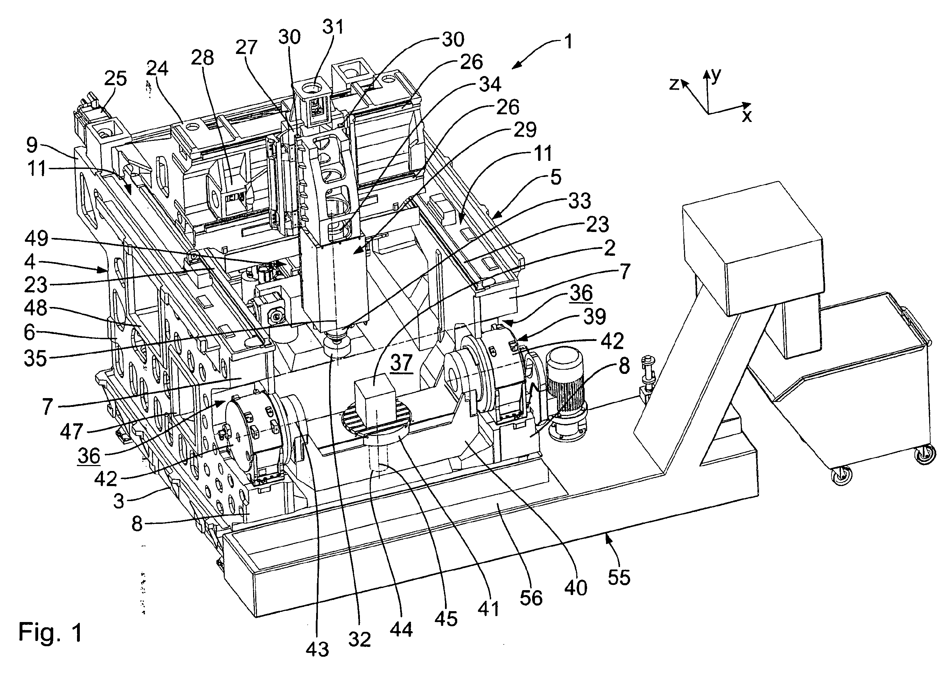

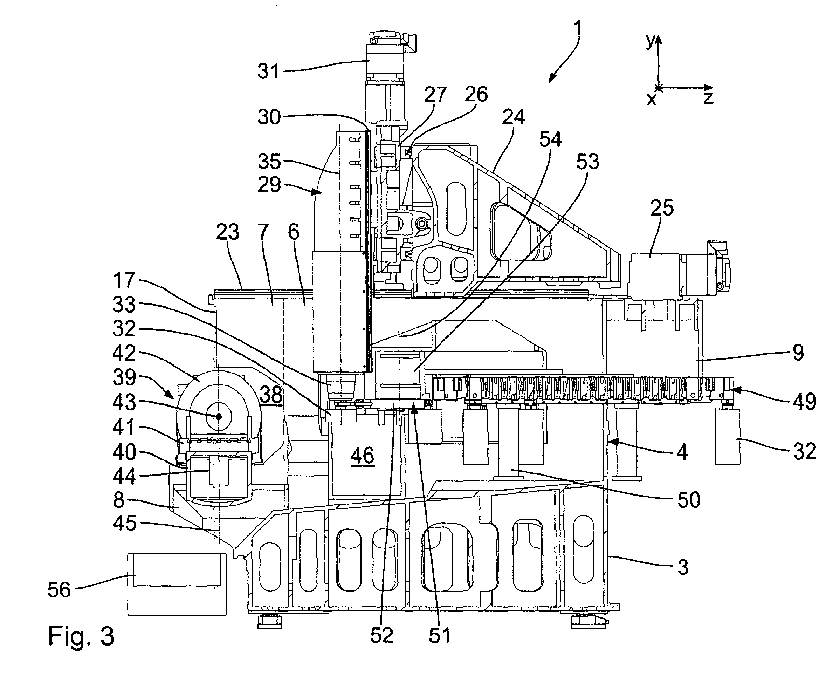

Nachfolgend wird anhand der Fig. 1 bis 3 ein erstes Ausführungsbeispiel der Erfindung beschrieben. Eine Werkzeugmaschine 1 zur spanenden Bearbeitung von metallischen Werkstücken 2 weist ein Maschinenbett 3 auf, auf dem eine erste Seitenwand 4 und eine spiegelsymmetrisch dazu ausgebildete zweite Seitenwand 5 angeordnet sind. Die Seitenwände 4, 5 sind in einer horizontalen x-Richtung zueinander beabstandet und verlaufen im Wesentlichen parallel zu einer y-z-Ebene, die durch eine vertikale y-Richtung und eine horizontale z-Richtung definiert ist. Die x-, y- und z-Richtung bilden ein kartesisches Koordinatensystem.

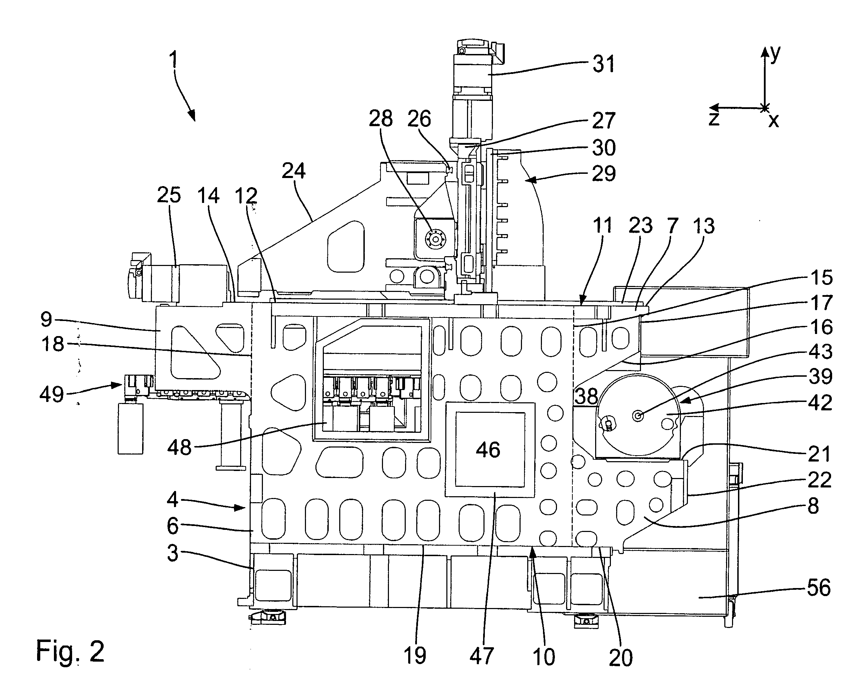

Die Seitenwände 4, 5 weisen jeweils einen im Wesentlichen rechteckförmigen Grundkörper 6 auf, an dem ein Verfahrvorsprung 7, ein Auflagevorsprung 8 und ein Lagervorsprung 9 einteilig angeformt sind. In Fig. 2 ist beispielhaft der rechteckige Grundkörper 6 der Seitenwand 4 mit gestrichelten Linien veranschaulicht. Jede der Seitenwände 4, 5 ist mit ihrer Seitenwand-Unterseite 10 auf dem Maschinengestell 3 befestigt. Die Seitenwand-Oberseite 11 liegt jeweils frei. Jede Seitenwand-Oberseite 11 wird durch die zugehörige Grundkörper-Oberseite 12, die Verfahrvorsprung-Oberseite 13 und die Lagervorsprung-Oberseite 14 gebildet, die miteinander fluchten. Die Verfahrvorsprünge 7 sind an der jeweiligen Grundkörper-Frontseite 15 im Bereich der Grundkörper-Oberseite 12 angeformt. Die Verfahrvorsprünge 7 verlaufen ausgehend von dem jeweiligen Grundkörper 6 in der z-Richtung keilförmig, so dass deren Verfahrvorsprung-Unterseiten 16 relativ zu der x-z-Ebene geneigt sind. Die Verfahrvorsprung-Frontseiten 17 verlaufen im Wesentlichen parallel zu der x-y-Ebene. In entsprechender Weise sind die Lagervorsprünge 9 an der Grundkörper-Rückseite 18 im Bereich der Grundkörper-Oberseite 12 angeformt. Die Lagervorsprünge 9 sind im Wesentlichen rechteckförmig ausgebildet.

Jede Seitenwand-Unterseite 10 ist durch die zugehörige Grundkörper-Unterseite 19 und die Auflagevorsprung-Unterseite 20 gebildet, die miteinander fluchten. Der Auflagevorsprung 8 jeder der Seitenwände 4, 5 ist an der Grundkörper-Frontseite 15 im Bereich der Grundkörper-Unterseite 19 angeformt. Ausgehend von dem jeweiligen Grundkörper 6 verlaufen die Auflagenvorsprünge 8 in der z-Richtung keilförmig. Die Auflagevorsprung-Oberseiten 21 verlaufen dabei parallel zu der x-z-Ebene, wohingegen die Auflagevorsprung-Unterseiten 20 in einem den Auflagevorsprung-Frontseiten 22 zugewandten Teilbereich relativ zu der x-z-Ebene geneigt verlaufen. Die Auflagevorsprung-Frontseiten 22 verlaufen im Wesentlichen parallel zu der x-y-Ebene.

Auf den Seitenwand-Oberseiten 11 sind z-Führungsschienen 23 angeordnet, die sich im Wesentlichen über die gesamte Grundkörper-Oberseite 12 und die Verfahrvorsprung-Oberseite 13 in der z-Richtung erstrecken. Auf den Seitenwänden 4, 5 ist ein z-Schlitten 24 nach Art einer Brücke gelagert und auf den z-Führungsschienen 23 mittels z-Antriebsmotoren 25 in der z-Richtung verfahrbar. Die z-Antriebsmotoren 25 sind jeweils auf der Lagervorsprung-Oberseite 14 befestigt.

An dem z-Schlitten 24 sind zwei parallel zueinander und in der x-Richtung verlaufende x-Führungsschienen 26 angeordnet. Ein x-Schlitten 27 ist auf den x-Führungsschienen 26 gelagert und mittels eines x-Antriebsmotors 28 in der x-Richtung verfahrbar.

An dem x-Schlitten 27 ist vertikal hängend eine Werkzeugspindel 29 angeordnet. Hierzu ist die Werkzeugspindel 29 mit zwei parallel zueinander angeordneten und in der y-Richtung verlaufenden y-Führungsschienen 30 an dem x-Schlitten 27 gelagert und mittels eines y-Antriebsmotors 31 in der y-Richtung verfahrbar. Die Werkzeugspindel 29 weist zum Aufnehmen eines Werkzeuges 32 eine Werkzeugaufnahme 33 auf, die mittels eines Spindelantriebsmotors 34 um eine parallel zu der y-Richtung verlaufende Spindeldrehachse 35 drehantreibbar ist.

Die in y-Richtung unterhalb der Verfahrvorsprünge 7 liegenden ersten Freiräume 36 und der zwischen diesen Freiräumen 36 liegende zweite Freiraum 37 bilden einen Bearbeitungsraum 38 aus. Der Bearbeitungsraum 38 dient zur Positionierung und Bearbeitung von Werkstücken 2. In diesem Bearbeitungsraum 38 sind die Auflagevorsprünge 8 und eine Werkstückpositioniereinheit 39 zum Positionieren des zu bearbeitenden Werkstückes 2 angeordnet. Die den Bearbeitungsraum 38 bildenden Freiräume 36 und 37 sind in Fig. 1 veranschaulicht.

Die Werkstückpositioniereinheit 39 ist als Dreh-Schwenk-Brücke ausgebildet und weist eine Schwenkbrücke 40 mit einem Drehteller 41 sowie zwei Brückenantrieben 42 auf. Die Brückenantriebe 42 sind auf der Auflagevorsprung-Oberseite 21 des jeweiligen Auflagevorsprungs 8 befestigt und somit in den ersten Freiräumen 36 angeordnet. Die Schwenkbrücke 40 ist mit den Brückenantrieben 42 verbunden und in dem zweiten Freiraum 37 um eine als A-Achse bezeichnete und parallel zu der x-Richtung verlaufende erste Schwenkachse 43 verschwenkbar angeordnet. Mittig auf der Schwenkbrücke 40 ist der Drehteller 41 gelagert. Der Drehteller 41 ist mittels eines Drehtellerantriebs 44 um eine senkrecht zu der Schwenkbrücke 40 verlaufende und als B-Achse bezeichnete zweite Schwenkachse 45 verschwenkbar.

Die Brückenantriebe 42 sind derart auf den Auflagevorsprüngen 8 angeordnet, dass die erste Schwenkachse 43 im Wesentlichen in der von den Verfahrvorsprung-Frontseiten 17 gebildeten Ebene liegt. Die erste Schwenkachse 43 ist somit durch ein entsprechendes Verfahren des z-Schlittens 24 von der Spindeldrehachse 35 überfahrbar.

Alternativ könnten die Brückenantriebe 42 an der Grundkörper-Frontseite 15 oder bei einer entsprechenden Ausgestaltung der Verfahrvorsprünge 7 an deren Verfahrvorsprung-Unterseite 16 befestigt werden, wodurch die Auflagevorsprünge 8 überflüssig wären.

Die Grundkörper 6 der Seitenwände 4, 5 begrenzen zwischen sich im Wesentlichen einen Arbeitsraum 46, der zum Wechseln von Werkzeugen 32 und/oder Werkstücken 2 nutzbar ist. Zum Zuführen von Werkstücken 2 und/oder Werkzeugen 32 in den Arbeitsraum 46 sowie zum Abführen dieser aus dem Arbeitsraum 46 weisen die Grundkörper 6 erste Beschickungsöffnungen 47 und zweite Beschickungsöffnungen 48 auf, die jeweils fluchtend zueinander ausgebildet sind. Auf dem Maschinenbett 3 ist im Bereich der Grundkörper-Rückseite 18 ein als Kettenmagazin ausgebildetes Werkzeugmagazin 49 in dem Arbeitsraum 46 angeordnet. Das Werkzeugmagazin 49 erstreckt sich über die Lagervorsprünge 9 hinaus und dient zur Aufnahme einer Vielzahl von unterschiedlichen Werkzeugen 32. Das Werkzeugmagazin 49 ist mittels eines Magazinantriebs 50 in Umfangsrichtung verfahrbar. Zum Werkzeugwechsel ist ein Werkzeugwechsler 51 zwischen dem Werkzeugmagazin 49 und der Dreh-Schwenk-Brücke 39 angeordnet. Der Werkzeugwechsler 51 weist einen Wechslerarm 52 auf, der mittels eines Wechslerantriebs 53 um eine parallel zu der y-Richtung verlaufende Wechslerachse 54 verschwenkbar ist. Die ersten Beschickungsöffnungen 47 sind im Bereich unterhalb des Werkzeugwechslers 51 angeordnet, die zweiten Beschickungsöffnungen 48 im Bereich des Werkzeugmagazins 49.

In dem Bearbeitungsraum 38 ist unterhalb der Auflagevorsprünge 8 und der Dreh-Schwenk-Brücke 39 ein separater Spänesammler 55 angeordnet. Der Spänesammler 55 weist einen Auffangbehälter 56 mit darin angeordneten und nicht näher dargestellten Späneförderern auf, so dass bei der Bearbeitung der Werkstücke 2 anfallende Späne in dem Auffangbehälter 56 aufgefangen und in der x-Richtung abtransportiert werden können.

Die Funktionsweise der Werkzeugmaschine 1 ist wie folgt:

Zunächst wird manuell ein zu bearbeitendes Werkstück 2 auf dem Drehteller 41 angeordnet und befestigt. Die Werkzeugspindel 29 wird zu dem Wechslerarm 52 verfahren, der zuvor ein Werkzeug 32 aus dem Werkzeugmagazin 49 entnommen hat und dieses durch Drehen um die Wechslerachse 54 der Werkzeugspindel 29 bereitstellt. Die Werkzeugspindel 29 entnimmt aus dem Wechslerarm 52 das Werkzeug 32 und beginnt mit der Bearbeitung des Werkstücks 2. Da die Werkzeugspindel 29 in x-, y- und z-Richtung verfahrbar ist, stehen für die Bearbeitung des Werkstücks 2 drei NC-Linearachsen zur Verfügung. Weiterhin stehen als NC-Rotationsachsen die Schwenkachsen 43 und 45 der Dreh-Schwenk-Brücke 39 für die Bearbeitung zur Verfügung, so dass eine fünfachsige Bearbeitung des Werkstücks 2 möglich ist.

Mittels der Werkzeugmaschine 1 ist sowohl eine Dreh- als auch eine Fräsbearbeitung des Werkstückes 2 möglich. Bei einer Drehbearbeitung ist ein Dreh-Werkzeug 32 in der Werkzeugspindel 29 aufgenommen und um die Spindeldrehachse 35 verklemmt. Der Drehteller 41 wird mit einer hohen Drehzahl von beispielsweise 1200 U/min betrieben. Durch Zustellen des Dreh-Werkzeuges 32 erfolgt die Drehbearbeitung. Bei der Fräsbearbeitung wird ein Fräs-Werkzeug 32 in der Werkzeugspindel 29 aufgenommen, wobei dieses um die Spindeldrehachse 35 drehangetrieben wird. Die Schwenkbrücke 40 dient zum Positionieren des Werkstückes 2. Die Brückenantriebe 42 weisen hierzu eine hohe Positioniergenauigkeit auf und werden mit Drehzahlen von maximal 35 U/min betrieben.

Aufgrund der Verfahrvorsprünge 7 kann die Werkzeugspindel 29 derart in z-Richtung verfahren werden, dass die Spindeldrehachse 35 die erste Schwenkachse 43 der Dreh-Schwenk-Brücke 39 überfährt. Hierdurch wird eine hohe Flexibilität bei der Werkstückbearbeitung bereitgestellt. Die bei der Bearbeitung anfallenden Späne fallen unmittelbar in den Spänesammler 55 und werden abtransportiert. Die Führungsschienen 23, 26 und 30 sind außerhalb des Bearbeitungsraums 38 angeordnet und somit vor Verschmutzungen, wie beispielsweise vor den Spänen, geschützt.

Zum Werkzeugwechsel übergibt die Werkzeugspindel 29 dem Wechslerarm 52 das nicht mehr benötigte Werkzeug 32. Gleichzeitig entnimmt der Wechslerarm 52 dem Werkzeugmagazin 49 das neue Werkzeug 32, das vorher in eine entsprechende Übergabeposition gebracht wurde. Durch Drehen des Wechslerarms 52 wird das neue Werkzeug 32 der Werkzeugspindel 29 zur Verfügung gestellt und das nicht mehr benötigte Werkzeug in das Werkzeugmagazin 49 abgelegt. Anschließend kann die Bearbeitung des Werkstückes 2 fortgesetzt werden. Ist die Bearbeitung des Werkstücks 2 beendet, wird dieses manuell von dem Drehteller 41 entfernt und ein neues Werkstück 2 darauf angeordnet.

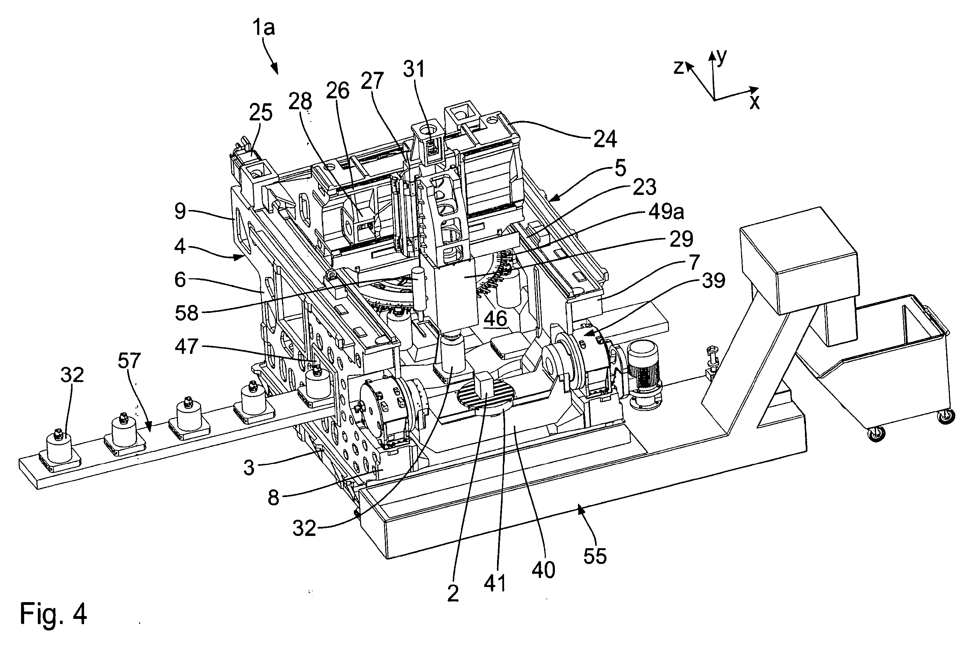

Nachfolgend wird unter Bezugnahme auf Fig. 4 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Die Werkzeugmaschine 1a weist zusätzlich eine Transporteinrichtung 57 zum Zu- und Abführen von Werkstücken 2 und/oder Werkzeugen 32 auf. Die Transporteinrichtung 57 ist als Transportband ausgebildet und durchquert die ersten Beschickungsöffnungen 47 und den Arbeitsraum 46. Das Werkzeugmagazin 49a ist als Scheibenmagazin ausgebildet. Ein Werkzeugwechsler ist nicht vorgesehen. Zum Greifen der Werkstücke 2 ist seitlich an der Werkzeugspindel 29 ein Werkstückgreifer bzw. ein Werkstückwechselarm 58 montiert. Der Werkstückgreifer 58 kann als Einfach- oder Doppelgreifer ausgeführt sein. Bei einer Ausführung als Doppelgreifer kann gleichzeitig ein zu bearbeitendes Werkstück 2 und ein fertig bearbeitetes Werkstück 2 gegriffen werden. Hierdurch ist eine Verkürzung der Werkstückwechselzeiten erzielbar. Durch die seitliche Anordnung an der Werkzeugspindel 29 kann der Werkstückgreifer 58 über die maschineneigenen linearen NC-Achsen positioniert werden und benötigt somit keine eigenen NC-Achsen. Der Werkstückgreifer 58 ist als Kolben-Zylinder-Einheit ausgebildet und mit einem gewünschten Hub in y-Richtung in eine Greifposition ausfahrbar. Diese ist in Fig. 4 gezeigt. Die Anordnung des Werkstückgreifers 58 ist derart, dass dieser nicht in Kollision mit der Werkzeugspindel 29 und/oder einem Werkzeug 32 gerät.

Die zu bearbeitenden Werkstücke 2 werden zunächst mittels der Transporteinrichtung 57 bis zu einer Werkstückwechselposition in den Arbeitsraum 46 transportiert und dort vereinzelt. Die Werkstücke 2 können unmittelbar auf der Transporteinrichtung 57 oder auf einer Transportpalette transportiert werden. Ein vereinzeltes Werkstück 2 wird mittels des in der Greifposition befindlichen Werkstückgreifers 58 aufgegriffen, auf dem Drehteller 41 abgelegt und dort in üblicher Weise aufgespannt. Da der Werkstückgreifer 58 an der Werkzeugspindel 29 angeordnet ist, kann dieser in x-, y- und z-Richtung zusammen mit der Werkzeugspindel 29 verfahren werden. Die Bearbeitung des Werkstückes 2 erfolgt entsprechend dem ersten Ausführungsbeispiel. Der Werkstückgreifer 58 ist während der Bearbeitung in einem eingefahrenen Zustand, so dass dieser nicht in Kollision mit dem Werkstück 2 oder dem Werkzeug 32 gerät. Das fertig bearbeitete Werkstück 2 wird mit dem Werkstückgreifer 58 wieder aufgegriffen und auf der Transporteinrichtung 57 abgelegt, die dieses abtransportiert. Ist der Werkstückgreifer 58 als Doppelgreifer ausgebildet, so kann gleichzeitig von der Transporteinrichtung 57 ein weiteres zu bearbeitendes Werkstück 2 aufgenommen und auf dem Drehteller 41 abgelegt werden. Verschlissene Werkzeuge 32 werden ebenfalls auf der Transporteinrichtung 57 abgelegt und abtransportiert. Das Werkzeugmagazin 49a kann mit neuen Werkzeugen 32 bestückt werden, indem diese mittels der Transporteinrichtung 57 in den Arbeitsraum 46 transportiert werden und dort von der Werkzeugspindel 29 aufgenommen und direkt in das Werkzeugmagazin 49a abgelegt werden. Somit ist eine einfache Pick-up-Werkstück- und Werkzeughandhabung möglich. Alle Bewegungen der Werkstücke 2 und der Werkzeuge 32 werden somit mit maschineneigenen NC-Achsen durchgeführt. Hinsichtlich der weiteren Funktionsweise wird auf das erste Ausführungsbeispiel verwiesen.

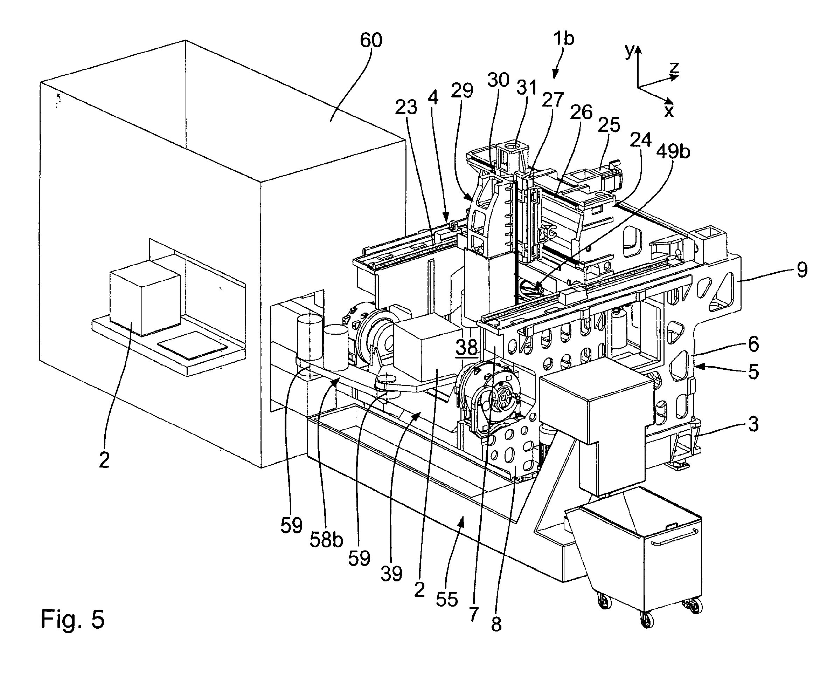

Nachfolgend wird unter Bezugnahme auf Fig. 5 ein drittes Ausführungsbeispiel der Erfindung beschrieben. Konstruktiv identische Teile erhalten dieselben Bezugszeichen wie bei den vorangegangenen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten b. Der Werkstückgreifer 58b ist bei der Werkzeugmaschine 1b als Gelenkarm ausgebildet. Der Gelenkarm 58b ist um zwei parallel zu der y-Richtung verlaufende Greiferachsen 59 verschwenkbar und in der x-Richtung linear verfahrbar. Zur Bereitstellung der Werkstücke 2 ist seitlich neben der Seitenwand 4 ein Werkstückmagazin 60 angeordnet. Die Werkstücke 2 werden durch Verfahren und Verschwenken des Gelenkarms 58b aus dem Werkstückmagazin 60 entnommen und auf dem Drehteller 41 angeordnet. Nach der Bearbeitung wird das Werkstück 2 in entsprechender Weise von dem Drehteller 41 entfernt und wieder in dem Werkstückmagazin 60 abgelegt. Hinsichtlich der weiteren Funktionsweise wird auf die vorangegangenen Ausführungsbeispiele verwiesen.

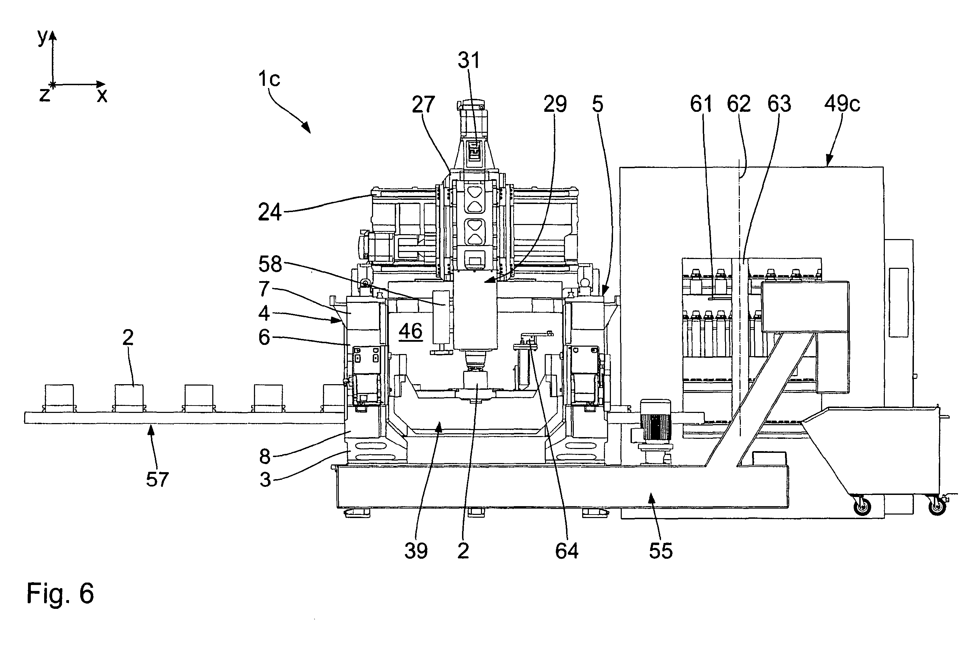

Nachfolgend wird unter Bezugnahme auf Fig. 6 ein viertes Ausführungsbeispiel der Erfindung beschrieben. Identische Teile erhalten dieselben Bezugszeichen wie bei den vorangegangenen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten c. Das Werkzeugmagazin 49c der Werkzeugmaschine 1 c ist als Regalmagazin ausgebildet und seitlich neben der Seitenwand 5 angeordnet. Das Werkzeugmagazin 49c weist eine Werkzeugtransporteinrichtung mit einem Greifarm 61 auf. Der Greifarm 61 ist um eine parallel zu der y-Richtung verlaufende Greifarmachse 62 verschwenkbar und in der y-Richtung verfahrbar an einem Greifarmträger 63 angelenkt. Im Arbeitsraum 46 ist im Bereich der zweiten Beschickungsöffnung 48 der Seitenwand 5 eine Werkzeugablage 64 auf dem Maschinenbett 3 angeordnet. Die Werkzeugablage 64 kann als einzelner Werkzeughalter - wie in Fig. 6 gezeigt - oder als Leerplatz in einem Werkzeugmagazin ausgebildet sein. Für einen Werkzeugwechsel entnimmt der Greifarm 61 ein neues Werkzeug 32 aus dem Werkzeugmagazin 49c und transportiert dieses durch Verdrehen und Verfahren des Greifarms 61 durch die zweite Beschickungsöffnung 48 zu der Werkzeugablage 64, wo das Werkzeug 32 abgelegt wird. Die Werkzeugspindel 29 wird zu der Werkzeugablage 64 verfahren, wo diese das abgelegte Werkzeug 32 aufnimmt. Anschließend wird mit dem Werkzeug 32 die Werkstückbearbeitung durchgeführt. Ein nicht mehr benötigtes Werkzeug 32 wird in entsprechender Weise wieder in dem Werkzeugmagazin 49c abgelegt. Die Speicherkapazität des Werkzeugmagazins 49c kann prinzipiell unbegrenzt vergrößert werden. Das Greifen der Werkstücke 2 erfolgt mit dem Werkstückgreifer 58, der entsprechend dem zweiten Ausführungsbeispiel seitlich an der Werkzeugspindel 29 angeordnet ist. Hinsichtlich der weiteren Funktionsweise wird auf die vorangegangenen Ausführungsbeispiele verwiesen.

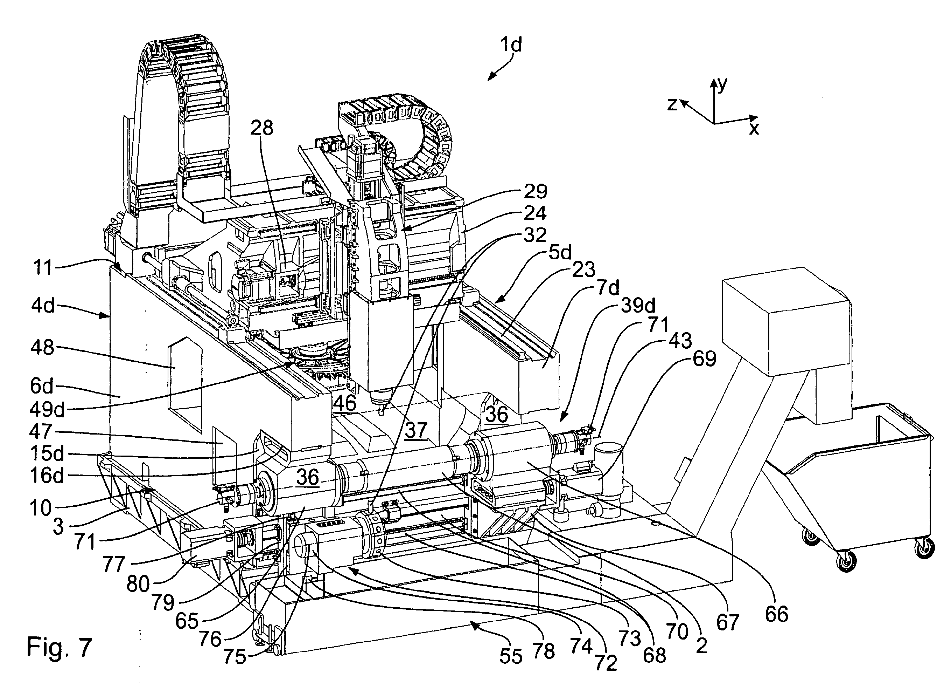

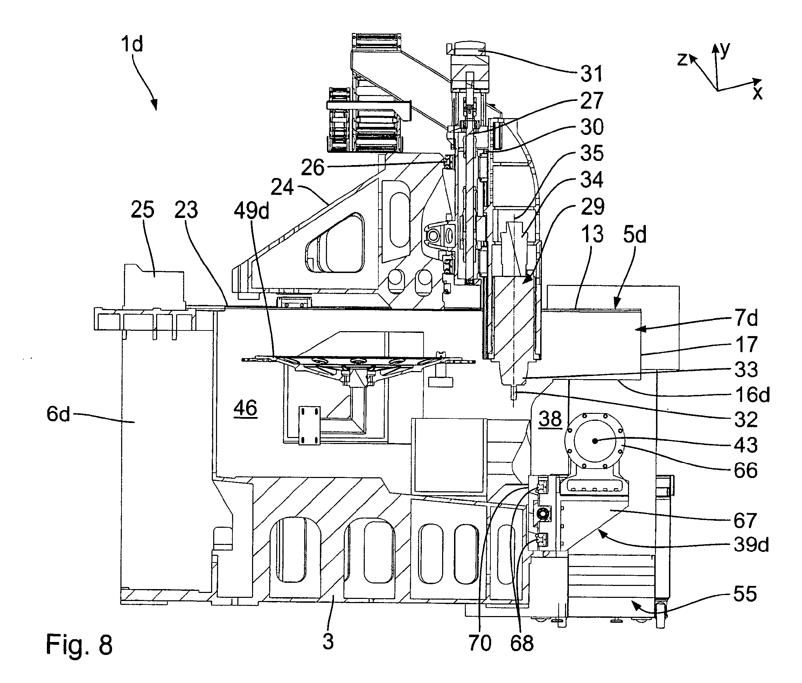

Nachfolgend wird unter Bezugnahme auf die Fig. 7 und 8 ein fünftes Ausführungsbeispiel der Erfindung beschrieben. Identische Teile erhalten dieselben Bezugszeichen wie bei den vorangegangenen Ausführungsbeispielen, auf dessen Beschreibung hiermit verwiesen wird. Konstruktiv unterschiedliche, jedoch funktionell gleichartige Teile erhalten dieselben Bezugszeichen mit einem nachgestellten d. Die Werkstückpositioniereinheit 39d der Werkzeugmaschine 1 d ist zur Bearbeitung von wellenförmigen und/oder flanschförmigen Werkstücken 2 ausgelegt. Hierzu ist eine erste als Werkstückspindel ausgebildete Werkstückaufnahme 65 an der parallel zu der x-z-Ebene verlaufenden Verfahrvorsprung-Unterseite 16d der Seitenwand 4d befestigt. Eine zweite als Werkstückspindel ausgebildete Werkstückaufnahme 66 ist auf einem zweiten x-Schlitten 67 befestigt. Der x-Schlitten 67 ist auf zweiten x-Führungsschienen 68 gelagert und mittels eines zweiten x-Antriebsmotors 69 in der x-Richtung verfahrbar. Die zweiten x-Führungsschienen 68 sind an einer Maschinenbett-Frontseite 70 und an den Grundkörper-Frontseiten 15d befestigt, so dass sich diese über den gesamten Bearbeitungsraum 38 erstrecken. Die Werkstückspindeln 65, 66 weisen jeweils einen zugehörigen Werkstückspindelantriebsmotor 71 auf, so dass ein in den Werkstückspindeln 65, 66 aufgenommenes Werkstück 2 um die Schwenkachse 43 drehantreibbar ist. Zusätzlich zu der Werkzeugspindel 29 ist ein Werkzeugrevolver 72 mit einer Revolverscheibe 73 und einem Revolverantriebsmotor 74 vorgesehen. Die Revolverscheibe 73 ist mittels des Revolverantriebsmotors 74 um eine parallel zu der x-Richtung verlaufende Revolverachse 75 verschwenkbar. Der Werkzeugrevolver 72 ist auf einem y-Schlitten 76 angeordnet, der auf zweiten y-Führungsschienen 77 mittels eines zweiten y-Antriebsmotors 78 in der y-Richtung verfahrbar ist. Die zweiten y-Führungsschienen 77 sind auf einem dritten x-Schlitten 79 angeordnet, der auf den zweiten x-Führungsschienen 68 mittels eines dritten x-Antriebsmotors 80 in der x-Richtung verfahrbar ist. Der Werkzeugrevolver 72 ist auf der der ersten Werkstückspindel 65 zugewandten Seite des zweiten x-Schlittens 67 angeordnet.

Das Zu- und Abführen der Werkstücke 2 erfolgt manuell. Wellenförmige Werkstücke 2 werden in beiden Werkstückspindeln 65, 66 aufgenommen und drehangetrieben. Die Bearbeitung erfolgt mittels der Werkzeugspindel 29 und/oder des Werkzeugrevolvers 72. Der Werkzeugrevolver 72 ist hierzu in dem Bearbeitungsraum 38 unterhalb des Werkstücks 2 und der ersten Werkstückspindel 65 beliebig in x- und y-Richtung verfahrbar. Durch die verfahrbare zweite Werkstückspindel 66 können unterschiedlich lange Werkstücke 2 aufgenommen werden. Der Werkzeugrevolver 72 ist aufgrund seiner kurzen Hebelarme äußerst steif ausgebildet. Dementsprechend wird die Drehbearbeitung der wellenförmigen Werkstücke 2 vorzugsweise mit dem Werkzeugrevolver 72 durchgeführt, da hierdurch Rundheiten und Koaxialitäten der einzelnen wellenförmigen Abschnitte mit Toleranzen im Mikrometerbereich erzielbar sind. Zur Fertigbearbeitung der Werkstücke 2 wird vorzugsweise die Werkzeugspindel 29 eingesetzt, die über die drei linearen NC-Achsen in x-, y- und z-Richtung positioniert werden kann. Ohne eine Neueinspannung des Werkstückes 2 sind mittels der Werkzeugspindel 29 verschiedene Bohrungs-, Gewinde- und Fräsbearbeitungen möglich. Darüber hinaus lassen sich durch die Interpolationsfähigkeit der drei linearen NC-Achsen in Verbindung mit der Schwenkachse 43 auch komplizierte prismatische und/oder sphärische Geometrien des Werkstückes 2 herstellen.

Weiterhin können flanschförmige Werkstücke 2 beidseitig bearbeitet werden. Hierzu wird das Werkstück 2 zunächst in die erste Werkstückspindel 65 aufgenommen und mittels der Werkzeugspindel 29 und/oder des Werkzeugrevolvers 72 bearbeitet. Anschließend wird die zweite Werkstückspindel 66 zu der ersten Werkstückspindel 65 verfahren und das Werkstück 2 an die zweite Werkstückspindel 66 übergeben. Das Werkstück 2 kann nun mittels der Werkzeugspindel 29 und/oder des Werkzeugrevolvers 72 an der zuvor eingespannten Seite bearbeitet werden. Gleichzeitig kann in die erste Werkstückspindel 65 ein neues Werkstück 2 eingespannt und bearbeitet werden. Sind in beiden Werkstückspindeln 65, 66 Werkstücke 2 aufgenommen, so kann die Werkzeugspindel 29 das eine und der Werkzeugrevolver 72 das andere Werkstück 2 bearbeiten.

Mittels des Werkzeugrevolvers 72 kann eine Drehbearbeitung der Werkstücke 2 stattfinden, wohingegen die Werkzeugspindel 29 ein Werkzeug 2 drehantreiben kann und so an dem feststehenden Werkstück 2 eine Bohrbearbeitung durchführen kann. Hinsichtlich der weiteren Funktionsweise wird auf die vorangegangenen Ausführungsbeispiele verwiesen.

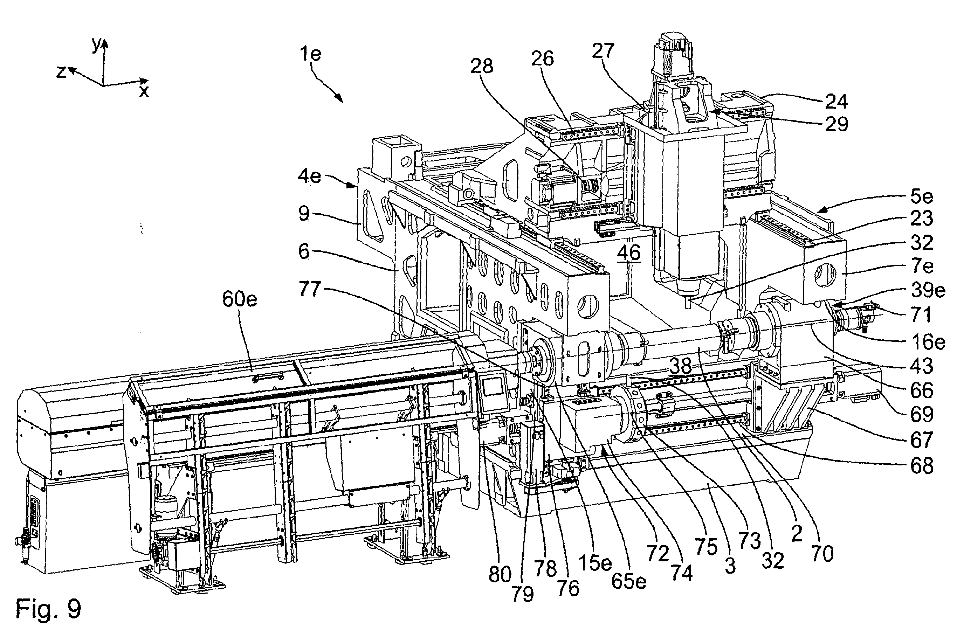

Nachfolgend wird unter Bezugnahme auf Fig. 9 ein sechstes Ausführungsbeispiel der Erfindung beschrieben. Identische Teile erhalten dieselben Bezugszeichen wie bei den vorangegangenen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten e. Die Werkzeugmaschine le weist zusätzlich zu dem fünften Ausführungsbeispiel ein Werkstückmagazin 60e auf, das die wellenförmigen Werkstücke 2 durch die erste Werkstückspindel 65e dieser und der zweiten Werkstückspindel 66 zuführen und in entsprechender Weise wieder abführen kann. Das Werkstückmagazin 60e ermöglicht somit eine automatische Zu- und Abführung von Werkstücken 2. Die erste Werkstückspindel 65e ist im Unterschied zu dem vorangegangenen Ausführungsbeispiel an der Grundkörper-Frontseite 15e befestigt. Hinsichtlich der weiteren Funktionsweise wird auf die vorangegangenen Ausführungsbeispiele verwiesen.

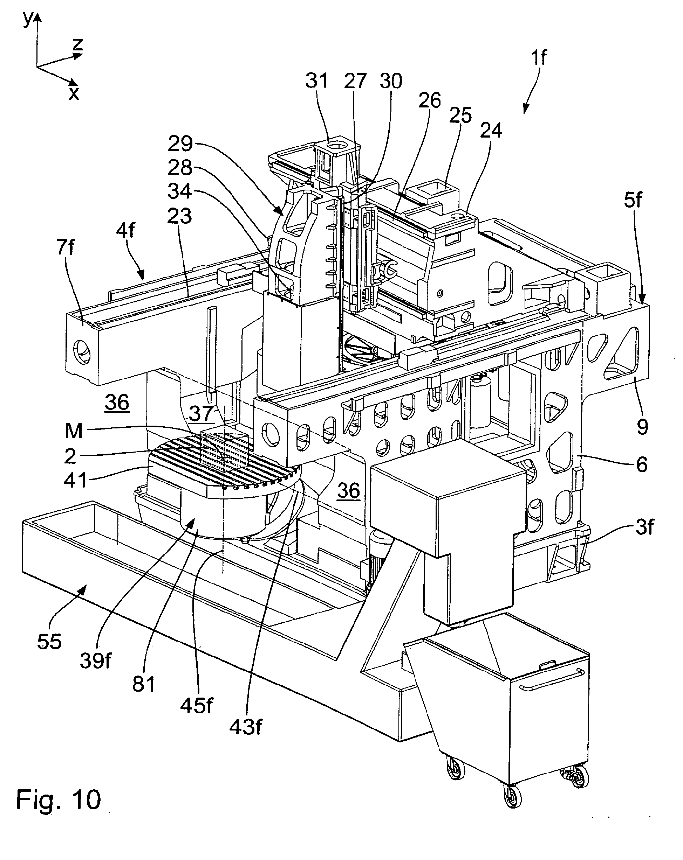

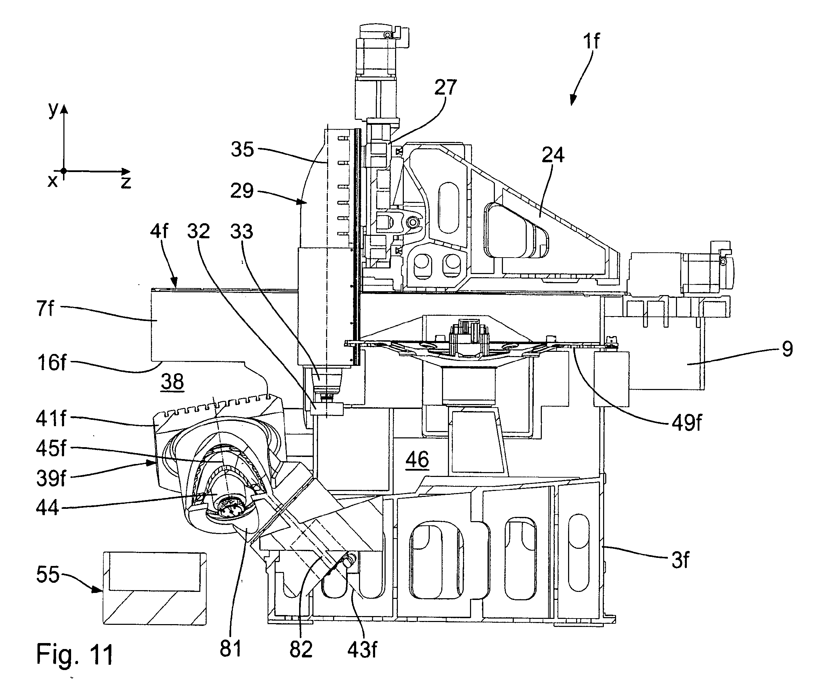

Nachfolgend wird unter Bezugnahme auf die Fig. 10 und 11 ein siebtes Ausführungsbeispiel der Erfindung beschrieben. Identische Teile erhalten dieselben Bezugszeichen wie bei den vorangegangenen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten f. Die Werkstückpositioniereinheit 39f der Werkzeugmaschine 1f ist als Zwei-Achsen-Tisch ausgebildet. Auf dem Maschinenbett 3f ist ein Schwenkteil 81 derart angeordnet, dass die erste Schwenkachse 43f in der y-z-Ebene um 45° relativ zu der y-Richtung geneigt verläuft und sich in den Bearbeitungsraum 38 erstreckt. Das Verschwenken des Schwenkteils 81 um die erste Schwenkachse 43f erfolgt mittels eines in dem Maschinenbett 3f integrierten Schwenkantriebs 82. An dem Schwenkteil 81 ist der Drehteller 41 f derart angeordnet, dass die zweite Schwenkachse 45f mit der ersten Schwenkachse 43f einen Winkel von 135° einschließt. In der in Fig. 10 gezeigten Stellung verläuft die zweite Schwenkachse 45f somit parallel zu der y-Richtung. Der Drehteller 41 f ist im Wesentlichen in dem Bearbeitungsraum 38 unterhalb der Verfahrvorsprünge 7f angeordnet. Der Drehtellerantrieb 44 ist in das Schwerlkteil 81 integriert.

Das Zu- und Abführen von Werkstücken 2 erfolgt manuell. Bei der Bearbeitung kann das Werkstück 2 nach Bedarf um die Schwenkachsen 43f und 45f verschwenkt und mit einem in der Werkzeugspindel 29 aufgenommenen Werkzeug 32 bearbeitet werden. Dadurch, dass der z-Schlitten 24 bis an das Ende der Verfährvorsprünge 7f verfahrbar ist, kann die Werkzeugspindel 29 mit ihrer Spindeldrehachse 35 die zweite Schwenkachse 45f bei einer beliebigen Stellung um die erste Schwenkachse 43f überfahren. Dies gewährleistet eine hohe Flexibilität bei der Werkstückbearbeitung. Mit dem Zwei-Achsen-Tisch können auch große Werkstücke 2 mit einem Durchmesser von 800 mm und mehr bearbeitet werden, da keine seitliche Begrenzung vorhanden ist. Dadurch, dass sich die Schwenkachsen 43f und 45f im Mittelpunkt M des Drehtellers 41 treffen, erfolgt das Verschwenken der Werkstücke 2 mit kurzen Wegen. Die erzielbaren Beschleunigungen beim Positionieren der Werkstücke 2 sind darüber hinaus äußerst hoch. Hinsichtlich der weiteren Funktionsweise wird auf die vorangegangenen Ausführungsbeispiele verwiesen.

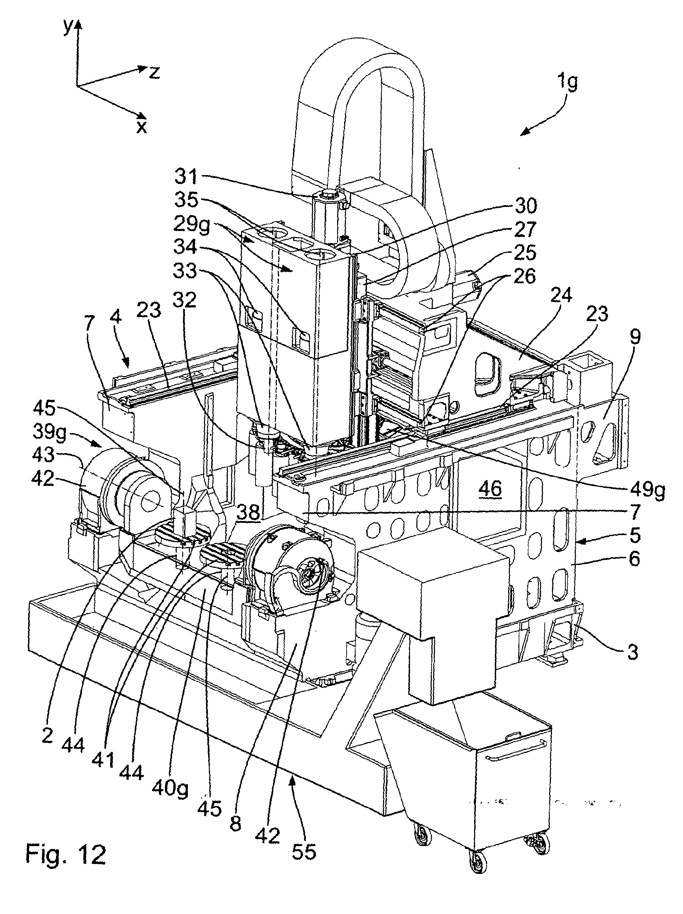

Nachfolgend wird unter Bezugnahme auf Fig. 12 ein achtes Ausführungsbeispiel der Erfindung beschrieben. Identische Teile erhalten dieselben Bezugszeichen wie bei den vorangegangenen Ausführungsbeispielen, auf deren Beschreibung hiermit verwiesen wird. Konstruktiv unterschiedliche Teile, jedoch funktionell gleichartige Teile erhalten dieselben Bezugszeichen mit einem nachgestellten g. Die Werkzeugmaschine 1g ist doppelspindlig ausgebildet und weist zwei nebeneinander angeordnete Werkzeugspindeln 29g auf, die gemeinsam in der y-Richtung verfahrbar sind. Die Werkstückpositioniereinheit 39g ist entsprechend dem ersten bis dritten Ausführungsbeispiel als Dreh-Schwenk-Brücke ausgebildet und weist zwei nebeneinander angeordnete Drehteller 41 auf. Mit der Werkzeugmaschine 1g ist eine gleichzeitige Bearbeitung von zwei Werkstücken 2 möglich. Hinsichtlich der weiteren Funktionsweise wird auf die vorangegangenen Ausführungsbeispiele verwiesen.

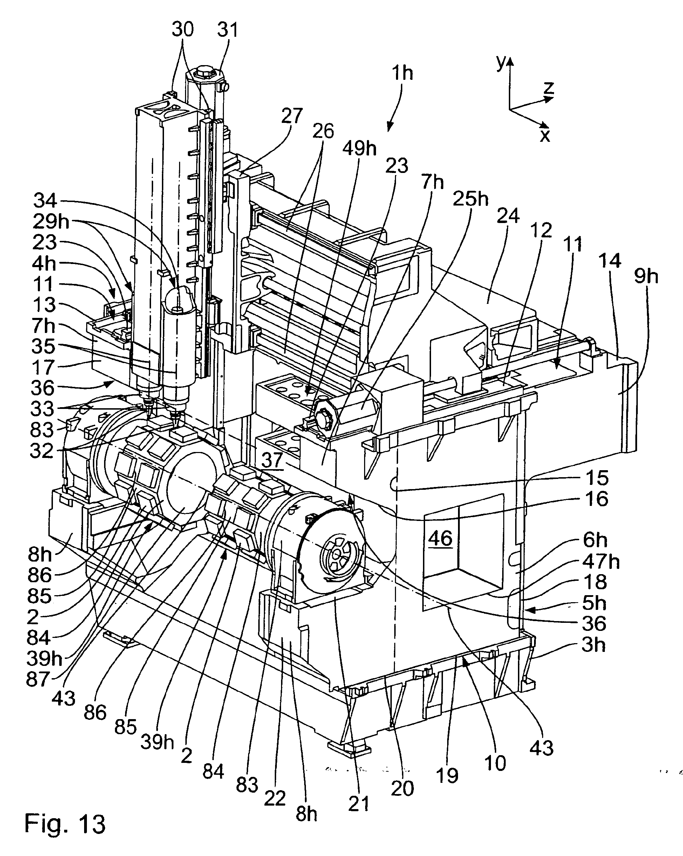

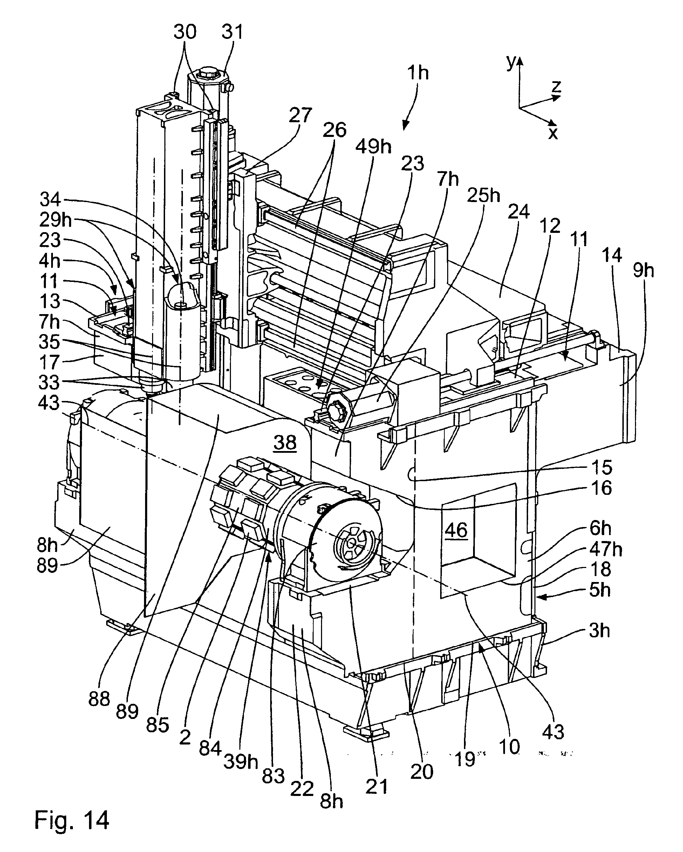

Nachfolgend wird unter Bezugnahme auf die Fig. 13 und 14 ein neuntes Ausführungsbeispiel der Erfindung beschrieben. Identische Teile erhalten dieselben Bezugszeichen wie bei den vorangegangenen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten h. Die Werkzeugmaschine 1h ist doppelspindlig ausgebildet und weist zwei nebeneinander angeordnete Werkzeugspindeln 29h auf, die gemeinsam in der y-Richtung verfahrbar sind. Die Werkzeugmaschine 1h weist zwei Werkstückpositioniereinheiten 39h auf, die jeweils einen Positionierantrieb 83 und einen im Querschnitt polygonförmigen Werkstückträger 84 aufweisen. Die Positionierantriebe 83 sind auf den Auflagevorsprüngen 8h befestigt. Die Werkstückträger 84 sind jeweils mit einem der Positionierantriebe 83 verbunden und unabhängig voneinander um die gemeinsame Schwenkachse 43 schwenkbar. Die Werkstückträger 84 erstrecken sich jeweils in Richtung des Bearbeitungsraums 38 und sind einander zugewandt. Jeder Werkstückträger 84 weist an seinem Außenumfang mehrere Polygonseiten 85 auf. An jeder Polygonseite 85 sind zwei Werkstückaufnahmen 86 in x-Richtung nebeneinander angeordnet. Die Anzahl und der Abstand der Werkstückaufnahmen 86 entsprechen der Anzahl und dem Abstand der Werkzeugspindeln 29h, sodass jeweils zwei Werkstücke 2 gleichzeitig bearbeitbar sind. Die Werkstückaufnahmen 86 sind beispielsweise als Klemmvorrichtung ausgebildet. Zur Gewichtsoptimierung weisen die Werkstückträger 84 jeweils eine zylinderformige Bohrung 87 auf. Die Werkstückträger 84 sind somit als Hohlzylinder mit einem im Querschnitt polygonförmigen Außenumfang ausgebildet. Zwischen den Werkstückpositioniereinheiten 39h ist eine senkrechte Trennwand 88 angeordnet und an dem Maschinenbett 3h befestigt. An jeder Seite der Trennwand 88 ist eine jalousieartige Abdeckung 89 für die Werkstückträger 84 geführt.

Mit den Werkzeugspindeln 29h werden jeweils zwei an einer Polygonseite 85 angeordnete Werkstücke 2 gleichzeitig bearbeitet. Der Werkstückträger 84 wird mittels des zugehörigen Positionierantriebs 83 sukzessive verschwenkt, sodass nach und nach die an den weiteren Polygonseiten 85 angeordneten Werkstücke 2 bearbeitet werden. Sind alle Werkstücke 2 bearbeitet, verfahren die Werkzeugspindeln 29h zu dem weiteren Werkstückträger 84, der zwischenzeitlich mit Werkstücken 2 bestückt wurde. Die Abdeckung 89 dieses Werkstückträgers 84 wird geschlossen, sodass die Bearbeitung von Werkstücken 2 fortgesetzt werden kann. Währenddessen wird die Abdeckung 89 des Werkstückträgers 84 mit den bereits bearbeiteten Werkstücken 2 geöffnet, sodass diese entnommen werden können. Anschließend wird der Werkstückträger 84 wieder mit zu bearbeitenden Werkstücken 2 bestückt. Hierdurch ist eine ständige Bearbeitung von Werkstücken 2 und eine hohe Produktivität der Werkzeugmaschine 1h gewährleistet. Durch die Verfahrvorsprünge 7h ist eine hohe Flexibilität bei der Bearbeitung der Werkstücke 2 gegeben, insbesondere können diese von verschiedenen Seiten bearbeitet werden. Sofern die Werkzeuge 32 verschlissen sind, können diese in das Werkzeugmagazin 49h abgelegt und daraus neue Werkzeuge 32 entnommen werden. Hinsichtlich der weiteren Funktionsweise wird auf die vorangegangenen Ausführungsbeispiele verwiesen.

Prinzipiell gilt für alle Ausführungsbeispiele, dass die Werkzeugmaschinen 1, 1a bis 1h modular aufgebaut sind. Die einzelnen Module Maschinenbett 3, 3f, 3h, Seitenwände 4, 4d, 4e, 4f, 4h, 5, 5d, 5e, 5f, 5h, Schlitten 24, 27, Werkzeugspindel 29, 29g, 29h, Werkstückpositioniereinheiten 39, 39d, 39e, 39f, 39g, 39h, Werkzeugmagazin 49, 49a bis 49h, Spänesammler 55, Transporteinrichtung 57 und Werkstückgreifer 58, 58b können je nach Bedarf beliebig miteinander kombiniert werden. Somit können die Werkzeugmaschinen 1a bis 1 h einfach für unterschiedliche Bearbeitungsprozesse, beispielsweise Drehen, Fräsen, Schleifen, Gewindebohren oder Verzahnen, konfiguriert werden. Durch den Grundaufbau der Werkzeugmaschinen 1, 1a bis 1h mit einem aus dem Maschinenbett 3, 3f, 3h und den Seitenwänden 4, 4d, 4e, 4f, 4h, 5, 5d, 5e, 5f, 5h gebildeten Ständer und einer Portalanordnung der Schlitten 24, 27 sowie der Werkzeugspindel 29, 29g, 29h wird eine hohe Stabilität in Verbindung mit einer hohen Robustheit gegenüber Verschmutzungen erzielt. Zusätzlich ist mittels der Werkzeugspindel 29, 29g, 29h eine Pick-up-Werkzeughandhabung möglich. Ist ein Werkstückgreifer 58 oder ein Greifwerkzeug an der Werkzeugspindel 29, 29g, 29h angeordnet, ist zusätzlich eine Pick-up-Werkstückhandhabung möglich. Das Verfahren der Schlitten 24, 27 und der Werkzeugspindel 29, 29g, 29h kann über Kugelrollspindeln und/oder Linearantriebe erfolgen. Durch die Verfaluworsprünge 7, 7d bis 7f, 7h wird ein frei zugänglicher Bearbeitungsraum 38 erzeugt, der durch Variation der Länge der Verfahrvorsprünge 7, 7d bis 7f, 7h in weiten Grenzen anpassbar ist. In dem Bearbeitungsraum 38 können je nach Bedarf unterschiedlichste Werkstückpositioniereinheiten 39, 39d, 39e, 39f, 39g, 39h angeordnet werden, wodurch die Werkzeugmaschinen 1, 1a bis 1 h für unterschiedlichste Bearbeittingsaufgaben ausgelegt werden können.

## Patentansprüche

1. Werkzeugmaschine zur Bearbeitung von Werkstücken mit
- einem Maschinenbett (3; 3f; 3h),
- zwei Seitenwänden (4, 5; 4d bis 4f, 5d bis 5f; 4h, 5h),
-- die im Wesentlichen parallel zueinander angeordnet sind,
-- die jeweils mit einer Seitenwand-Unterseite (10) an dem Maschinenbett (3; 3f; 3h) angeordnet sind und
-- die jeweils eine Seitenwand-Oberseite (11) aufweisen,
- einem z-Schlitten (24),
-- der im Bereich der Seitenwand-Oberseite (11) an den Seitenwänden (4, 5; 4d bis 4f, 5d bis 5f; 4h, 5h) angeordnet ist und
-- der mittels eines z-Antriebsmotors (25; 25h) in einer horizontalen z-Richtung an den Seitenwänden (4, 5; 4d bis 4f, 5d bis 5f; 4h, 5h) verfahrbar ist,
- einem x-Schlitten (27),
-- der an dem z-Schlitten (24) angeordnet ist und
-- der mittels eines x-Antriebsmotors (28) in einer horizontalen x-Richtung an dem z-Schlitten (24) verfahrbar ist, und
- einer drehantreibbaren Werkzeugspindel (29; 29g; 29h) zum Aufnehmen eines Werkzeuges (32);
-- die hängend an dem x-Schlitten (27) angeordnet ist und
-- die mittels eines y-Antriebsmotors (31) in einer vertikalen y-Richtung an dem x-Schlitten (27) verfahrbar ist,
**dadurch gekennzeichnet, dass**
- die Seitenwände (4, 5; 4d bis 4f, 5d bis 5f; 4h, 5h) jeweils einen Grundkörper (6; 6d; 6h) und einen daran angeordneten Verfahrvorsprung (7; 7d bis 7f; 7h) aufweisen, wobei
-- jeder der Verfahrvorsprünge (7; 7d bis 7f; 7h) derart mit dem zugehörigen Grundkörper (6; 6d; 6h) fluchtet, dass der z-Schlitten (24; 24h) an diesen verfahrbar ist, und
-- die in y-Richtung unterhalb der Verfahrvorsprünge (7; 7d bis 7f; 7h) liegenden ersten Freiräume (36) und ein zwischen diesen Freiräumen (36) liegender zweiter Freiraum (37) einen Bearbeitungsraum (38) ausbilden, und
- in dem Bearbeitungsraum (38) mindestens eine Werkstückpositioniereinheit (39; 39d bis 39g; 39h) für ein zu bearbeitendes Werkstück (2) angeordnet ist.

2. Werkzeugmaschine nach Anspruch 1, **dadurch gekennzeichnet, dass** jeder der Verfahrvorsprünge (7; 7d bis 7f; 7h) zusammen mit dem zugehörigen Grundkörper (6; 6d; 6h) die Seitenwand-Oberseite (11) bildet und der z-Schlitten (24) auf dieser verfahrbar angeordnet ist, wobei insbesondere jeder der Verfahrvorsprünge (7; 7d bis 7f; 7h) einteilig mit dem zugehörigen Grundkörper (6; 6d; 6h) ausgebildet ist.

3. Werkzeugmaschine nach Anspruch 1 oder 2, **dadurch gekennzeichnet, dass** jeder der Verfahrvorsprünge (7; 7d bis 7f; 7h) eine Verfahrvorsprung-Unterseite (16; 16d bis 16f) aufweist und zumindest eine der Verfahrvorspnmg-Unterseiten (16; 16d bis 16f) derart ausgebildet ist, dass zumindest ein Teil der mindestens einen Werkstückpositioniereinheit (39; 39d bis 39g) daran befestigbar ist.

4. Werkzeugmaschine nach einem der Ansprüche 1 bis 3, **dadurch gekennzeichnet, dass** zumindest eine der Seitenwände (4, 5; 4d bis 4f, 5d bis 5f; 4h, 5h) mindestens eine Beschickungsöffnung (47, 48; 47h) aufweist, wobei insbesondere jede der Seitenwände (4, 5; 4d bis 4f, 5d bis 5f; 4h, 5h) eine Beschickungsöffnung (47, 48, 47h) aufweist, die zueinander fluchtend ausgebildet sind.

5. Werkzeugmaschine nach einem der Ansprüche 1 bis 4, **dadurch gekennzeichnet, dass**
- die Seitenwände (4, 5; 4h, 5h) jeweils einen Auflagevorsprung (8; 8h) aufweisen, wobei insbesondere jeder der Auflagevorsprünge (8; 8h) einteilig mit dem zugehörigen Grundkörper (6; 6h) ausgebildet ist,
- jeder der Auflagevorsprünge (8; 8h) unterhalb des zugehörigen Verfahrvorsprungs (7; 7h) in dem Bearbeitungsraum (38) angeordnet ist, und
- auf den Auflagevorsprüngen (8; 8h) die mindestens eine Werkstückpositioniereinheit (39; 39g; 39h) angeordnet ist.

6. Werkzeugmaschine nach Anspruch 5, **dadurch gekennzeichnet, dass** die mindestens eine Werkstückpositioniereinheit (39; 39g) als Dreh-Schwenk-Brücke ausgebildet ist und jeweils ein Brückenantrieb (42) auf den Auflagevorsprüngen (8) angeordnet ist.

7. Werkzeugmaschine nach einem der Ansprüche- 1 bis 5, **dadurch gekennzeichnet, dass** zwei Werkstückpositioniereinheiten (39h) mit jeweils einem Positionierantrieb (83) und einem daran angeordneten polygonförmigen Werkstückträger (84) vorgesehen sind, wobei die Werkstückträger (84) insbesondere unabhängig voneinander mittels der Positionierantriebe (83) um eine gemeinsame, horizontal verlaufende Schwenkachse (43) verschwenkbar sind.

8. Werkzeugmaschine nach Anspruch 7, **dadurch gekennzeichnet, dass** jeder Positionierantrieb (83) auf einem der Auflagevorsprünge (8h) angeordnet ist und sich die polygonförmigen Werkstückträger (84) konzentrisch zu einer horizontalen Schwenkachse (43) der Positionierantriebe (83) in den Bearbeitungsraum (38) erstrecken.

9. Werkzeugmaschine nach Anspruch 7 oder 8, **dadurch gekennzeichnet, dass** an jeder Polygonseite (85) der polygonförmigen Werkstückträger (84) mehrere Werkstückaufnahmen (86) nebeneinander angeordnet sind, wobei die Anzahl der Werkstückaufnahmen (86) je Polygonseite (85) der Anzahl an Werkzeugspindeln (29h) entspricht.

10. Werkzeugmaschine nach einem der Ansprüche 1 bis 4, **dadurch gekennzeichnet, dass**
- eine erste Werkstückaufnahme (65; 65e) im Bereich eines der Verfahrvorsprünge (7d; 7e) an der zugehörigen Seitenwand (4d; 4e) in dem Bearbeitungsraum (38) angeordnet ist und
- eine zweite Werkstückaufnahme (66) in der x-Richtung fluchtend zu der ersten Werkstückaufnahme (65; 65e) in dem Bearbeitungsraum (38) angeordnet ist.

11. Werkzeugmaschine nach Anspruch 10, **dadurch gekennzeichnet, dass**
- die erste Werkstückaufnahme (65; 65e) als Werkstückspindel ausgebildet ist,
- die zweite Werkstückaufnahme (66) als Werkstückspindel ausgebildet und auf einem x-Schlitten (67) angeordnet ist und
- der x-Schlitten (67) an einer Maschinenbett-Frontseite (70) des Maschinenbetts (3) in der x-Richtung verfahrbar ist.

12. Werkzeugmaschine nach Anspruch 10 oder 11, **dadurch gekennzeichnet, dass** unterhalb der Werkstückaufnahmen (65, 66; 65e, 66) ein in der x-Richtung verfahrbarer Werkzeugrevolver (72) in dem Bearbeitungsraum (38) angeordnet ist.

13. Werkzeugmaschine nach einem der Ansprüche 1 bis 4, **dadurch gekennzeichnet, dass**
- die mindestens eine Werkstückpositioniereinheit (39f) an dem Maschinenbett (3f) angeordnet ist und sich in den Bearbeitungsraum (38) erstreckt und
- die Werkstückpositioniereinheit (39f) zwei Schwenkachsen (43f, 45f) aufweist, wobei eine der Schwenkachsen (43f) parallel zu einer y-z-Ebene und relativ zu der y-Richtung geneigt verläuft.

14. Werkzeugmaschine nach einem der Ansprüche 1 bis 13, **dadurch gekennzeichnet, dass** unterhalb der mindestens einen Werkstückpositioniereinheit (39; 39d bis 39f; 39h) ein separater Spänesammler (55) in dem Bearbeitungsraum (38) angeordnet ist.

15. Werkzeugmaschine nach einem der Ansprüche 1 bis 14, **dadurch gekennzeichnet, dass** zwischen den Seitenwänden (4, 5; 4d, 5d; 4f, 5f; 4h, 5h) ein Werkzeugmagazin (49; 49a; 49b; 49d; 49f; 49g; 49h) angeordnet ist.

## Claims

1. Machine tool for processing workpieces with
- a machine bed (3; 3f; 3h),
- two side walls (4, 5; 4d to 4f, 5d to 5f; 4h, 5h),
-- which are arranged to be substantially parallel to one another,
-- which are arranged respectively with a side wall bottom side (10) on the machine bed (3; 3f; 3h) and
-- which respectively have a side wall top side (11),
- a z-slide (24),
-- which is arranged in the region of the side wall top side (11) on the side walls (4, 5; 4d to 4f, 5d to 5f; 4h, 5h) and
-- which is moveable by means of a z-drive motor (25; 25h) in a horizontal z-direction on the side walls (4, 5; 4d to 4f, 5d to 5f; 4h, 5h),
- an x-slide (27),
-- which is arranged on the z-slide (24) and
-- which is moveable by means of an x-drive motor (28) in a horizontal x-direction on the z-slide (24), and
- a rotary-driven tool spindle (29; 29g; 29h) for mounting a tool (32),
-- which is arranged suspended on the x-slide (27) and
-- which is moveable by means of a y-drive motor (31) in a vertical y-direction on the x-slide (27),
**characterized in that**
- the side walls (4, 5; 4d to 4f, 5d to 5f; 4h, 5h) each comprise a basic body (6; 6d; 6h) and a moving projection (7; 7d to 7f; 7h) arranged thereon, wherein
-- each of the moving projections (7; 7d to 7f; 7h) is in alignment with the associated basic body (6; 6d; 6h) so that the z-slide (24; 24h) is moveable on both, and
-- the first free spaces (36) lying in y-direction underneath the moving projections (7; 7d to 7f; 7h) and a second free space (37) lying between said free spaces (36) form a processing space (38), and
- in the processing space (38) at least one workpiece positioning unit (39; 39d to 39g; 39h) for a workpiece (2) to be processed is arranged.

2. Machine tool according to claim 1, **characterized in that** each of the moving projections (7; 7d to 7f; 7h) together with the associated basic body (6; 6d; 6h) forms the side wall top side (11) and the z-slide (24) is arranged movably on the latter, wherein in particular each of the moving projections (7; 7d to 7f; 7h) is designed in one piece with the associated basic body (6; 6d; 6h).

3. Machine tool according to claim 1 or 2, **characterized in that** each of the moving projections (7; 7d to 7f; 7h) comprises a moving projection bottom side (16; 16d to 16f) and at least one of the moving projection bottom sides (16; 16d to 16f) is designed such that at least one part of the at least one workpiece positioning unit (39; 39d to 39g) is attachable thereonto.

4. Machine tool according to one of claims 1 to 3, **characterized in that** at least one of the side walls (4, 5; 4d to 4f, 5d to 5f; 4h, 5h) comprises at least one feed opening (47, 48; 47h), wherein in particular each of the side walls (4, 5; 4d to 4f, 5d to 5f; 4h, 5h) comprises a feed opening (47, 48, 47h) designed to be in alignment with one another.

5. Machine tool according to one of claims 1 to 4, **characterized in that**
- the side walls (4, 5; 4h, 5h) each comprise a support projection (8; 8h), wherein in particular each of the support projections (8; 8h) is designed to be in one piece with the associated basic body (6; 6h),
- each of the support projections (8; 8h) is arranged below the associated moving projection (7; 7h) in the processing space (38), and
- onto the support projections (8; 8h) the at least one workpiece positioning unit (39; 39g; 39h) is arranged.

6. Machine tool according to claim 5, **characterized in that** the at least one workpiece positioning unit (39; 39g) is designed as a rotary-pivot bridge and a bridge drive (42) is arranged respectively onto the support projections (8).

7. Machine tool according to one of claims 1 to 5, **characterized in that** two workpiece positioning units (39h) are provided each with a positioning drive (83) and a polygonal workpiece carrier (84) arranged thereon, wherein the workpiece carriers (84) is pivotable independently of one another by means of the positioning drives (83) about a joint, horizontal pivot axis (43).

8. Machine tool according to claim 7, **characterized in that** each positioning drive (83) is arranged onto one of the support projections (8h) and the polygonal workpiece carriers (84) extend concentrically to a horizontal pivot axis (43) of the positioning drives (83) into the processing space (38).

9. Machine tool according to claims 7 or 8, **characterized in that** on each polygon side (85) of polygonal workpiece carriers (84) several workpiece mounts (86) are arranged next to one another, wherein the number of workpiece mounts (86) per polygon side (85) corresponds to the number of tool spindles (29h).

10. Machine tool according to one of claims 1 to 4, **characterized in that**
- a first workpiece mount (65; 65e) is arranged in the region of one of the moving projections (7d; 7e) on the associated side wall (4d; 4e) in the processing space (38) and
- a second workpiece mount (66) is arranged in x-direction in alignment with the first workpiece mount (65; 65e) in the processing space (38).

11. Machine tool according to claim 10, **characterized in that**
- the first workpiece mount (65; 65e) is designed as a workpiece spindle,
- the second workpiece mount (66) is designed as a workpiece spindle and is arranged on an x-slide (67) and
- the x-slide (67) is moveable on a machine bed-front side (70) of the machine bed (3) in x-direction.

12. Machine tool according to claim 10 or 11, **characterized in that** underneath the workpiece mounts (65, 66; 65e, 66) a tool revolver (72) moveable in x-direction is arranged in the processing space (38).

13. Machine tool according to one of claims 1 to 4, **characterized in that**
- the at least one workpiece positioning unit (39f) is arranged on the machine bed (3f) and extends into the processing space (38) and
- the workpiece positioning unit (39f) comprises two pivot axes (43f, 45f), wherein one of the pivot axes (43f) runs inclined parallel to a y-z-plane and relative to the y-direction.

14. Machine tool according to one of claims 1 to 13, **characterized in that** underneath the at least one workpiece positioning unit (39; 39d to 39f; 39h) a separate chip collector (55) is arranged in the processing space (38).

15. Machine tool according to one of claims 1 to 14, **characterized in that** between the side walls (4, 5; 4d, 5d; 4f, 5f; 4h, 5h) a tool magazine (49; 49a; 49b; 49d; 49f; 49g; 49h) is arranged.

## Revendications

1. Appareil pour usiner des pièces comprenant
- un banc de machine (3 ; 3f ; 3h),
- deux parois latérales (4, 5 ; 4d à 4f, 5d à 5f ; 4h, 5h),
-- qui sont dans l'ensemble disposées parallèles l'une à l'autre,
-- qui sont chacune disposée avec une face inférieure (10) de paroi latérale sur le banc de machine (3 ; 3f ; 3h) et
--qui présentent chacune une face supérieure (11) de paroi latérale,
- un chariot d'axe z (24),
--qui est disposé au niveau de la face supérieure (11) de la paroi latérale sur les parois latérales (4, 5 ; 4d à 4f, 5d à 5f ; 4h, 5h) et
-- qui peut être déplacé au moyen d'un moteur d'entraînement d'axe z (25 ; 25h) dans une direction z horizontale sur les parois latérales (4, 5 ; 4d à 4f, 5d à 5f ; 4h, 5h),
- un chariot d'axe x (27),
-- qui est attenant au chariot d'axe z (24) et
-- qui peut être déplacé au moyen d'un moteur d'entraînement d'axe x (28) dans une direction x horizontale sur le chariot d'axe z (24), et
- une broche d'outils (29 ; 29g ; 29h) pour la réception d'un outil (32) qui peut être manoeuvrée par rotation,
-- broche qui est suspendue sur le chariot d'axe x (27) et
-- qui peut être déplacée au moyen d'un moteur d'axe y (31) dans une direction y verticale sur le chariot d'axe x (27),
**caractérisé en ce que**
- les parois latérales (4, 5 ; 4d à 4f, 5d à 5f ; 4h, 5h) présentent chacune un corps de base (6 ; 6d ; 6h) et une saillie pour le déplacement (7 ; 7d à 7f ; 7h) qui y est disposée,
-- chacune des saillies pour le déplacement (7 ; 7d à 7f ; 7h) étant alignée avec le corps de base (6 ; 6d ; 6h) de sorte que le chariot d'axe z (24 ; 24h) correspondant peut être déplacé sur ceux-ci, et
-- les premiers espaces libres (36) situés en dessous des saillies pour le déplacement (7 ; 7d à 7f ; 7h) dans la direction y et un second espace libre (37) situé entre ces espaces libres (36) formant un espace de travail (38), et
- dans l'espace de travail (38) au moins un dispositif de positionnement (39 ; 39d à 39g ; 39h) de l'outil (2) se trouve disposé.

2. Appareil selon la revendication 1 **caractérisé en ce que** chacune des saillies pour le déplacement (7 ; 7d à 7f ; 7h) forme avec le corps de base (6 ; 6 ; 6h) correspondant la face supérieure (11) de la paroi latérale et que le chariot d'axe z (24) y est disposé pouvant être déplacé, en particulier, chaque partie en saillie pour le déplacement (7 ; 7d à 7f ; 7h) étant constituée d'une seule pièce avec le corps de base (6 ; 6d ; 6h) correspondant.

3. Appareil selon les revendications 1 ou 2 **caractérisé en ce que** chacune des saillies pour le déplacement (7 ; 7d à 7f ; 7h) présente une face inférieure de saillie pour le déplacement de (16 ; 16d à 16f) et qu'au moins l'une des faces inférieures de saillie pour le déplacement (16 ; 16d à 16f) est formée de telle façon qu'au moins une partie du dispositif de positionnement de l'outil (39 ; 39d à 39g) peut y être fixée.

4. Appareil selon l'une des revendications de 1 à 3 **caractérisé en ce qu'**au moins l'une des parois latérales (4, 5 ; 4d à 4f, 5d à 5f ; 4h, 5h) présente au moins un orifice de chargement (47, 48 ; 47h), en particulier, chaque paroi latérale (4, 5 ; 4d à 4f, 5d à 5f ; 4h, 5h) présentant un orifice de chargement (47, 48 ; 47h) qui lui est aligné.

5. Appareil selon l'une des revendications de 1 à 4 **caractérisé en ce que**
- les parois latérales (4, 5 ; 4h, 5h) présentent chaque fois une saillie de support (8 ; 8h), en particulier, chaque saillie de support (8 ; 8h) étant formée d'une seule pièce avec le corps de base correspondant (6 ; 6h),
- chaque saillie de support (8 ; 8h) est disposée en dessous de la partie en saillie pour le déplacement correspondante (7 ; 7h) dans l'espace de travail, et
- au minimum un dispositif de positionnement de l'outil (39 ; 39g ; 39h) est disposé sur les saillies de support (8 ; 8h).

6. Appareil selon la revendication 5 **caractérisé en ce qu'**au moins un dispositif de positionnement d'outil (39 ; 39g) est conçu comme un pont de rotation et de pivotement et qu'un entraînement de pont (42) est disposé sur les saillies de support (8).

7. Appareil selon l'une des revendications de 1 à 5 **caractérisé en ce que** deux dispositifs de positionnement d'outil (39h) avec chaque fois un entraînement de positionnement (83), et un support d'outil (84) en forme de polygone qui lui est attenant, soient prévus, où, en particulier, les supports d'outils (84) peuvent pivoter autour d'un axe de pivotement (43) orienté horizontalement, indépendamment l'un de l'autre, au moyen des entraînements de positionnement (83).

8. Appareil selon la revendication 7 **caractérisé en ce que** chaque entraînement de positionnement (83) est disposé sur l'une des saillies de support (8h) et que les supports d'outils (84) en forme de polygones sont orientés de manière concentrique par rapport à un axe de pivotement (43) horizontal des entraînements de positionnement (83) dans l'espace de travail (38).

9. Appareil selon les revendications 7 ou 8 **caractérisé en ce que** sur chaque face de polygone (85) du support d'outils (84) en forme de polygone sont disposés les uns à côté des autres plusieurs mandrins (86), le nombre de mandrins (86) correspondant, selon la face de polygone, au nombre de broches d'outil (29h).

10. Appareil selon l'une des revendications de 1 à 4 **caractérisé en ce que**
- qu'un premier mandrin (65 ; 65^{e}) est disposé au niveau de l'une des saillies pour le déplacement (7d ; 7^{e}) sur la paroi latérale (4d ; 4^{e}) correspondante dans l'espace de travail (38) et
- qu'un second mandrin (66) est disposé dans la direction x, aligné par rapport au premier mandrin (65 ; 65e) dans l'espace de travail (38).

11. Appareil selon la revendication 10 **caractérisé en ce que**
- le premier mandrin (65 ; 65e) est conçu comme une broche à outils,
- le second mandrin (66) est conçu comme une broche à outils et est disposé sur un chariot (67) d'axe x,
- le chariot (67) d'axe x peut être déplacé dans la direction x sur une partie frontale (70) du banc de machine du banc de machine (3).

12. Appareil selon les revendications 10 ou 11 **caractérisé en ce qu'**en dessous des mandrins (65,66 ; 65e, 66), dans la direction x, est disposée une tourelle pour outils (72), pouvant être déplacée dans l'espace de travail (38).

13. Appareil selon l'une des revendications de 1 à 4 **caractérisé en ce que**
- qu'au moins un dispositif de positionnement d'outils (39f) est attenant au banc de machine (3f) et est orienté vers l'espace de travail (38) et
- que le dispositif de positionnement d'outil (39f) présente deux axes de pivotement (43f, 45f), l'un des axes de pivotement (43f) s'orientant parallèlement à un plan y-z et étant incliné par rapport à la direction y.

14. Appareil selon l'une des revendications de 1 à 13 **caractérisé en ce qu'**en dessous d'au moins un dispositif de positionnement d'outil (39 ; 39d à 39f ; 39h) se trouve disposé un collecteur de copeaux (55) dans l'espace de travail (38).

15. Appareil selon l'une des revendications de 1 à 14 **caractérisé en ce qu'**entre les parois latérales (4, 5 ; 4d, 5d ; 4f, 5f ; 4h, 5h) se trouve disposé un magasin d'outils (49 ; 49a ; 49b ; 49d ; 49f ; 49h).
